# EUROPÄISCHE PATENTSCHRIFT

(11) **EP 1 021 310 B1**
(45) Veröffentlichungstag und Bekanntmachung des Hinweises auf die Patenterteilung: **18.04.2001**
(21) Anmeldenummer: 98952683.5
(22) Anmeldetag: 01.10.1998
(51) Int. Cl.: B60K 41/12

(54) **ANTRIEBSSTRANGSTEUERUNG**
TRANSMISSION LINE CONTROLLER
COMMANDE DE CHAINE CINEMATIQUE

(30) Priorität: 07.10.1997 DE 19744218
(43) Veröffentlichungstag der Anmeldung: 26.07.2000
(73) Patentinhaber: ZF FRIEDRICHSHAFEN Aktiengesellschaft, 88038 Friedrichshafen (DE)
(72) Erfinder: CHATTERJEE, Arun-Kuma, D-88046 Friedrichshafen (DE); HEITZ, Uwe, D-88048 Friedrichshafen (DE); DOBLER, Siegfried, D-88085 Langenargen (DE)
(86) Internationale Anmeldenummer: EP9806257
(87) Internationale Veröffentlichungsnummer: WO9917950

(56) Entgegenhaltungen:
- EP-A- 0 415 048
- EP-A- 0 698 518
- WO-A-93/21031
- DE-A- 4 223 967
- DE-A- 19 631 070
- US-A- 4 648 040
- US-A- 4 866 622
- JAUFMANN, A.: "Entwicklung und Aufbau eines Traktormanagementsystems" O+P ÖLHYDRAULIK UND PNEUMATIK, Bd. 41, Nr. 4, 1997, Seiten 234-241, XP002091000 in der Anmeldung erwähnt

## Beschreibung

Die Erfindung bezieht sich auf eine Antriebsstrangsteuerung zur gesamtheitlichen Steuerung von Antriebsmaschine und Getriebe für ein Fahrzeug oder eine selbstfahrende Arbeitsmaschine mit einer Antriebsmaschine mit Drehzahlregelung und einem stufenlos verstellbaren Getriebe mit Übersetzungsregelung.

Eine Antriebsstrangsteuerung im Rahmen eines Traktormanagementsystems ist in einem Aufsatz von A. Jaufmann, "O + P "Ölhydraulik und Pneumatik" 41 (1997) Nr. 4, 234 - 241" skizziert. Detaillierte Hinweise auf die Steuerungs- und Regelungsstrategien oder -algorithmen zur Handhabung des Gesamtsystems aus Antriebsmaschine und Getriebe sind aber nicht aufgezeigt.

Die US-A-4,866,622 offenbart eine Antriebsstrangsteuerung für ein motorbetriebenes Fahrzeug, welche einer Antriebsmaschine mit Regelung und einem stufenlose Getriebe mit Übersetzungsregelung übergeordnet ist. Hierbei wird die vom Fahrer vorgegebene Gaspedalposition übersetzt in einen Sollwert für Gas und einen Sollwert für die Übersetzung.

Der Erfindung liegt die Aufgabe zugrunde, eine Antriebsstrangsteuerung zu schaffen, die einen Antriebsstrang mit den Komponenten Antriebsmaschine mit Drehzahlregelung und stufenlos verstellbares Getriebe mit Übersetzungsregelung derart steuert, daß möglichst wenig Energie verbraucht wird, aber bei Bedarf die erforderliche Leistung bzw. Zugkraft zur Verfügung steht. Dabei sollen die Übergänge zwischen den eingestellten Kombinationen von Drehzahl der Antriebsmaschine und Übersetzung schnell und stabil erfolgen.

Diese Aufgabe wird mit einer, auch die kennzeichnenden Merkmale des Hauptanspruchs aufweisenden, gattungsgemäßen Antriebsstrangsteuerung gelöst.

Besondere Ausgestaltungen der Erfindung sind in den Unteransprüchen ausgeführt.

Ein Ausführungsbeispiel der Erfindung wird im folgenden unter Zuhilfenahme von Schemadarstellungen und Funktionsgraphen näher beschrieben.
Es zeigen:
- Fig. 1: ein Blockschaltbild, in dem die Einbindung der Antriebsstrangsteuerung in das Fahrzeug-Gesamtsystem dargestellt ist;
- Fig. 2: eine Schemadarstellung der Antriebsstrangsteuerung mit Getriebeabtriebsdrehzahlregler und dem Regler zur Entlastung der Antriebsmaschine;
- Fig. 3: eine Schemadarstellung des Getriebeabtriebsdrehzahlreglers;
- Fig. 4: Kennlinien von Rechengrößen des Getriebeabtriebsdrehzahlreglers zur Ermittlung seiner Stellgröße, der Soll-Drehzahl n mot soll der Antriebsmaschine;
- Fig. 5: eine Schemadarstellung des Reglers zur Entlastung der Antriebsmaschine;
- Fig. 6: Kennlinien von Rechengrößen des Reglers zur Entlastung der Antriebsmaschine zur Ermittlung seiner Stellgröße, der Soll-Getriebeübersetzung i_soll.

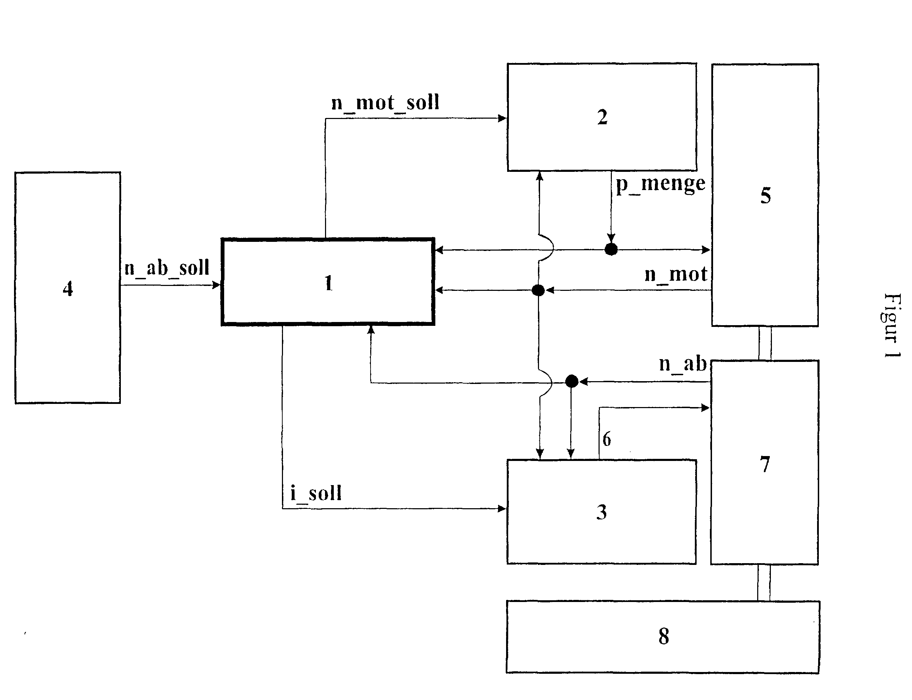

Die Antriebsstrangsteuerung 1 ist eine übergeordnete Software-Einheit, die Sollwerte an die unterlagerten Regelkreise Regelung 2 der Antriebsmaschine 5 und Übersetzungsregelung 3 des stufenlos verstellbaren Getriebes 7 übergibt (Figur 1). Sie gibt eine Soll-Drehzahl n_mot_soll an die Regelung 2 der Antriebsmaschine 5 und eine Soll-Getriebeübersetzung i_soll an die Übersetzungsregelung 3 aus. Um eine Division durch Null zu vermeiden kann anstelle des Getriebeübersetzungssollwerts i_soll auch ein Sollwert für die reziproke Übersetzung verwendet werden. Sämtliche im folgenden beschriebenen Rechenoperationen werden in diesem Fall in analoger Weise anstelle mit der Getriebeübersetzung i und aller von ihr abgeleiteten Größen mit der reziproken Getriebeübersetzung i_rez und ihren analog abgeleiteten Größen durchgeführt. Die reziproke Getriebeübersetzung i_rez = n_abtrieb/n_antrieb wird insbesondere bei stufenlosen Leistungsverzweigungsgetrieben bevorzugt, da sich bei diesem Getriebetyp durch die Summation beider Leistungszweige in einem Summationsqetriebe für bestimmte Getriebeeinstellungen bei endlicher Antriebsdrehzahl die Abtriebsdrehzahl Null einstellen kann. Diese Nulldivision, d. h. Getriebeübersetzung unendlich, wird bei Verwendung der reziproken Getriebeübersetzung vermieden.

Zur Berechnung dieser Sollwerte verarbeitet die Antriebsstrangsteuerung 1 mindestens folgende Eingangsgrößen:
die Soll-Getriebeabtriebsdrehzahl n_ab_soll, die proportional zur vom Fahrer 4 vorgegebenen Soll-Fahrgeschwindigkeit ist;
die (Ist-)Getriebeabtriebsdrehzahl n_ab;
die (Ist-)Drehzahl n_mot der Antriebsmaschine 5;
das Lastsignal p_menge der Regelung 2 der Antriebsmaschine 5.

Die Regelung 2 der Antriebsmaschine 5 gibt an diese das Signal der Einspritzmenge oder Last p_menqe aus, um die gewünschte Drehzahl der Antriebsmaschine 5 so weit wie möglich einzuhalten. Die Übersetzungsregelung 3 gibt getriebespezifisch verschiedene Steuersignale 6 an das Getriebe 7 aus, um die gewünschte triebliche Verbindung zwischen Antriebsmaschine 5 und Fahrzeug 8 herzustellen.

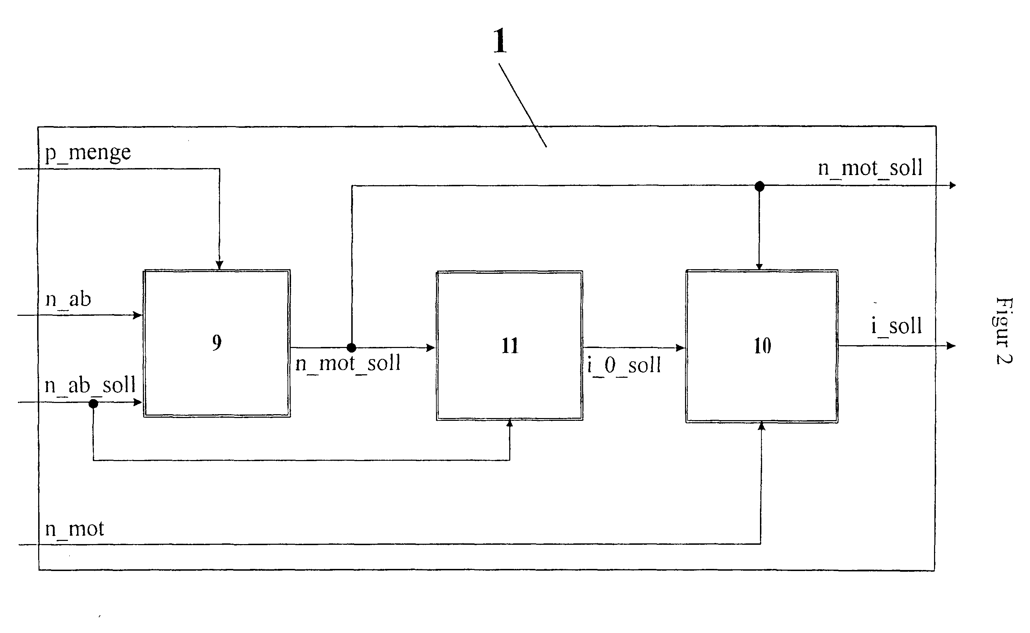

Die Antriebsstrangsteuerung 1 (Figur 2) zielt darauf ab, die zur Soll-Fahrgeschwindigkeit nötige Leistung mit möglichst niedriger Drehzahl der Antriebsmaschine 5 bereitzustellen. Dies ist in Hinblick auf den Wirkungsgrad sehr günstig, da der Antriebsstrang auf diese Weise nahe am Wirkungsgrad-Optimum betrieben wird. Die Antriebsstrangsteuerung 1 ist als Kombination zweier Regler realisiert, dem Getriebeabtriebsdrehzahlregler 9 und dem Regler 10 zur Entlastung der Antriebsmaschine 5. Die Regelmechanismen beider Regler wirken gleichzeitig und erganzen sich gegenseitig. Der Getriebeabtriebsdrehzahlregler 9 ist durch die Getriebeabtriebsdrehzahl n_ab als Regelgröße und die Soll-Drehzahl n_mot_soll der Antriebsmaschine 5 als Stehgröße charakterisiert. Die Regelgröße des Reglers 10 zur Entlastung der Antriebsmaschine 5 ist die Drehzahl n_mot der Antriebsmaschine 5. Seine Stellgröße ist ein Korrekturwert Δi für die Grob-Getriebesollübersetzung i_0_soll, die unter Heranziehung von Sollfahrgeschwindigkeit und Soll-Drehzahl n_mot_soll der Antriebsmaschine 5 in einer Recheneinheit 11 voreingestellt wird.

Die Leistungsanforderung wird vom Getriebeabtriebsdrehzahlregler 9 durch den Vergleich von Soll- und IstAbtriebsdrehzahl ermittelt (Figur 2). Als Korrektur zu dieser Abhängigkeit wird die Stellgröße n_mot_soll noch zusätzlich vom Lastsignal p_menge der Regelung 2 der Antriebsmaschine 5 beeinflußt. Anfangs gibt der Getriebeabtriebsdrehzahlregler 9 eine niedrige Soll-Drehzahl n_mot_soll für die Antriebsmaschine 5 aus. Bei geringem Leistungsbedarf kann die vorgegebene Soll-Getriebeabtriebsdrehzahl n_ab_soll eingehalten werden. Steigt der Leistungsbedarf, sinkt die Getriebeabtriebsdrehzahl n_ab. Der Getriebeabtriebsdrehzahlregler 9 erhöht darauf hin die Soll-Drehzahl n_mot_soll der Antriebsmaschine 5 so lange, bis wegen der höheren Antriebsleistung die Getriebeabtriebsdrehzahl n_ab ihren Sollwert n_ab_soll wieder erreicht.

Aus der Soll-Drehzahl n_mot_soll der Antriebsmaschine 5 wird die vorläufige Grob-Getriebesollübersetzung i_0_soll in der Recheneinheit 11 durch die Beziehung i_0_soll= n_mot_soll/n_ab_soll berechnet. Dieser vorläufige Wert i_0_soll ist Eingangsgröße in den Regler 10 zur Entlastung der Antriebsmaschine 5 und wird von diesem zu der endgültigen Soll-Getriebeübersetzung i_soll korrigiert. Die Korrektur richtet sich nach der Abweichung der Ist-Drehzahl der Antriebsmaschine 5 von ihrer Soll-Drehzahl (n_mot_soll - n_mot), der sogenannten Drückung der Antriebsmaschine 5. Bei Drückung der Antriebsmaschine 5 (n_mot < n_mot_soll) wird die Übersetzung zu kürzeren Übersetzungen hin korrigiert, d. h. zu größeren Soll-Übersetzungszahlen i_soll. Bei Hochdrehen der Antriebsmaschine 5 (n_mot > n_mot_soll) wird die Übersetzung zu längeren Übersetzungen hin korrigiert, d. h. zu kleineren Soll-Übersetzungszahlen i_soll. Diese Korrektur ist wegen der hohen Dynamik der Grob-Getriebesollübersetzung i_0_soll erforderlich. Denn dieser Sollwert wird aus der Soll-Getriebeabtriebsdrehzahl n_ab_soll berechnet, und letztere ist direkt durch die Geschwindigkeitsvorgabe des Fahrers 4 gegeben. Der Fahrer 4 aber kann seine Geschwindigkeitsvorgabe instantan verändern und damit wäre auch die Sollübersetzung auf einen Schlag verändert. Bei einer schnellen Verstellung zu langen Übersetzungen hin übt das Getriebe 7 auf die Antriebsmaschine 5 ein starkes Widerstandsmoment aus. Das Fahrzeug 8 behält aufgrund seiner Massenträgheit die Geschwindigkeit annähernd bei, während sich die veränderte Übersetzung nahezu ausschließlich in einer Drückung der Drehzahl der Antriebsmaschine 5 äußert. Die Regelung 2 der Antriebsmaschine 5 ist nicht in der Lage, die von der Antriebsstrangsteuerung 1 vorgegebene Drehzahl n_mot_soll an der Antriebsmaschine 5 zu halten. Je nach Drehmoment-Belastung kann die Antriebsmaschine 5 sogar abgewürgt werden. Analog kann eine schnelle Verstellung zu kurzen Übersetzungen hin ein starkes antreibendes Moment auf die Antriebsmaschine 5 ausüben. triebsmaschine 5 ausüben. Der Regler 10 zur Entlastung der Antriebsmaschine 5 berechnet aus der Grob-Getriebesollübersetzung i_0_soll den korrigierten wert 1_soll, dieser wird an die Übersetzungsregelung 3 des Getriebes 7 weitergegeben. Aufgrund der korrigierten Übersetzung ist die Regelung 2 der Antriebsmaschine 5 in der Lage, die von der Antriebsstrangsteuerung 1 ausgegebene Soll-Drehzahl n_met_soll an der Antriebsmaschine 5 näherungsweise einzuhalten. Diese Korrektur von i_0_soll bewirkt also eine Entlastung der Antriebsmaschine 5. Daher wurde für diesen Regler 10 der Name "Regler zur Entlastung der Antriebsmaschine" gewählt.

Im folgenden wird der Getriebeabtriebsdrehzahlregler 9 näher beschrieben:

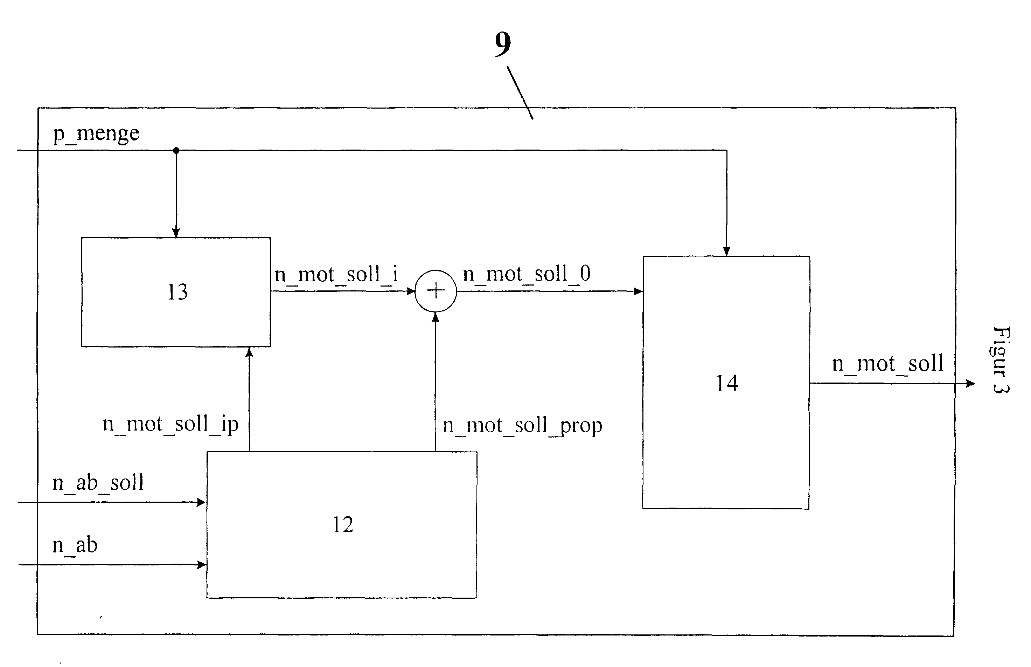

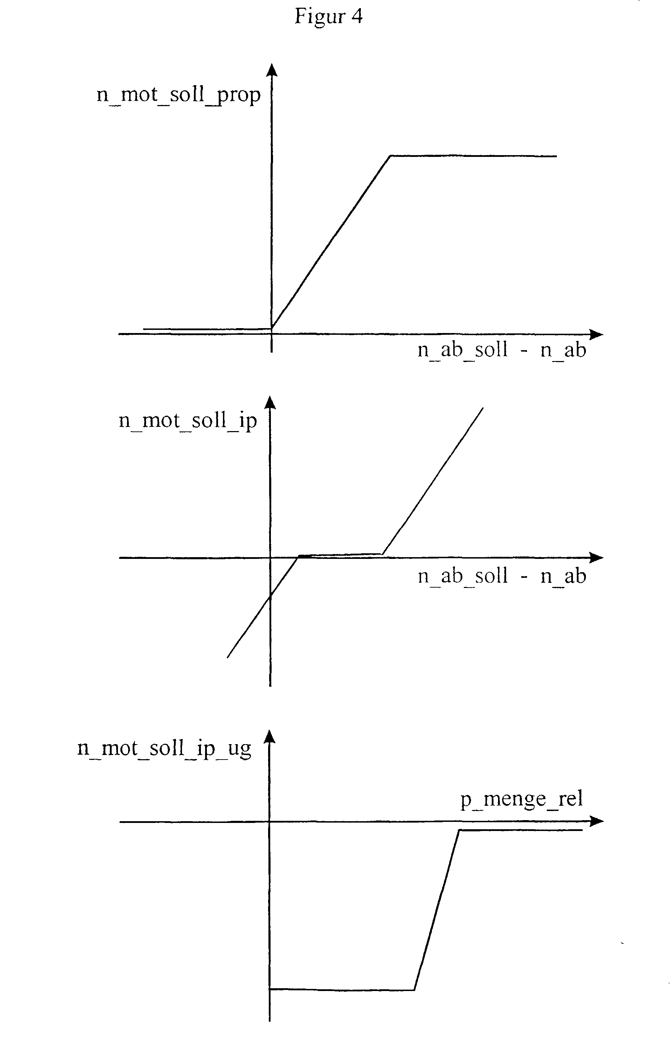

Der Getriebeabtriebsdrehzahlregler 9 ist im wesentlichen aus einem Proportional-Integral-Regler 12 aufgebaut (Figur 3). Der Proportional- und der Integralanteil der Stehgröße n_mot_soll besitzt jeweils eine nichtlineare Abhängigkeit von der Regelabweichung n_ab_soll - n_ab. Zusätzlich verfügen sowohl der Integralanteil als auch die Gesamt-Stellgröße über eine Gradienten- und Absolutwertbegrenzung. Der Proportionalanteil n mot_soll_prop der Stellgröße n_mot_soll sowie die zeitliche Ableitung ihres Integralanteils n_mot_soll_ip werden jeweils mittels Kennlinien in Abhängigkeit von der Regelabweichung n_ab_soll - n_ab ermittelt (Figur 4). Die zeitliche Ableitung n_mot_soll_ip des Integralanteils n_mot_soll_i der Stellgröße n_mot_soll wird zum absoluten Integralanteil n_mot_soll_i in einem Integrierer 13 aufintegriert, wobei die folgenden Begrenzungen wirksam sind:
Die Integration wird gestoppt, wenn der Integralanteil n_mot_soll_i einen Wert n_mot_soll_i_ug für eine untere Begrenzung bzw. einen Wert n_mot_soll_i_og für eine obere Begrenzung erreicht hat. Das bedeutet, es bleibt stets:
   n_mot_soll_i_ug ≤ n_mot_soll_i ≤ n_mot_soll_i_og
Außerdem wird die zeitliche Ableitung n_met_soll_ip des Integralanteils n_mot_soll_i der Stellgröße n_mot_soll durch einen Minimalwert n_met_soll_ip_ug begrenzt. Der Minimalwert n_mot_soll_ip_ug ist als Kennlinie in Abhängigkeit der relativen Last p_menge_rel der Antriebsmaschine 5 vorgegeben (Figur 4). Die relative Last p_menge_rel ist der Quotient aus dem Lastsignal p_menge und der drehzahlabhängigen Vollast p_menge_max der Antriebsmaschine 5:
   p_menge_rel = p_menge/p_menge_max.
Die Werte von p menge_max als Funktion der Motordrehzahl n_mot sind Abstimmparameter entsprechend der Antriebsmaschine 5.
Durch die Gradientenbegrenzung ist also stets
   n_mot_soll_ip_ug ≤ n_mot_soll_ip
   erfüllt.
Die beiden Regleranteile n_mot_soll_i und n_mot_soll_prop werden zu einem Vorgabewert n_mot_soll_0 für die Drehzahl n_mot soll der Antriebsmaschine 5 aufsummiert. Dieser Summenwert n_mot_soll_0 wird durch ein Verzögerungsglied 14 (PT1-Glied) mit Gradienten- und Absolutwertbegrenzung gefiltert. Die Begrenzungen sorgen dafür, daß für die endgültige Stellgröße n_mot_soll des Getriebeabtriebsdrehzahlreglers 9 sowie für deren zeitliche Ableitung stets folgende Bedingungen erfüllt sind:
   n_mot_min ≤ n_mot_soll ≤ n_mot_max
      und
   n_mot_soll_p_min ≤ n mot_soll_p ≤ n_mot_soll_p_max
      wobei
   n_mot_min ein vorgegebener Minimalwert der Soll-Drehzahl n_mot_soll der Antriebsmaschine 5 und
   n_mot_max ein vorgegebener Maximalwert der Soll-Drehzahl n_mot_soll der Antriebsmaschine 5 ist
      und wobei
   n_mot_soll_p_min ein vorgegebener Minimalwert der zeitlichen Ableitung n_mot_soll_p der Soll-Drehzahl n_mot_soll der Antriebsmaschine 5 und
   n_mot_soll_p_max ein vorgegebener Maximalwert der zeitlichen Ableitung n_mot_soll_p der Soll-Drehzahl der Antriebsmaschine 5 ist.
Dabei ist in der Regel der vorgegebene Minimalwert n_mot_soll_p_min der zeitlichen Ableitung n_mot_soll_p der Soll-Drehzahl der Antriebsmaschine 5 durch den schon oben für n_mot_soll_ip verwendeten Grenzwert n_mot_soll_ip_ug festgelegt.
n_mot_soll_p max ist in der Regel eine feste, als Abstimmparameter vorgegebene Grenze.

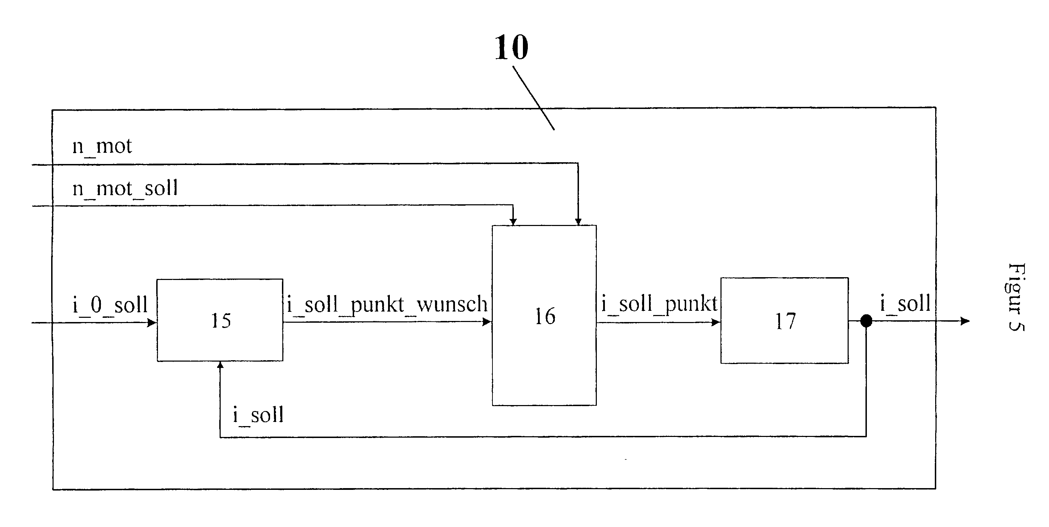

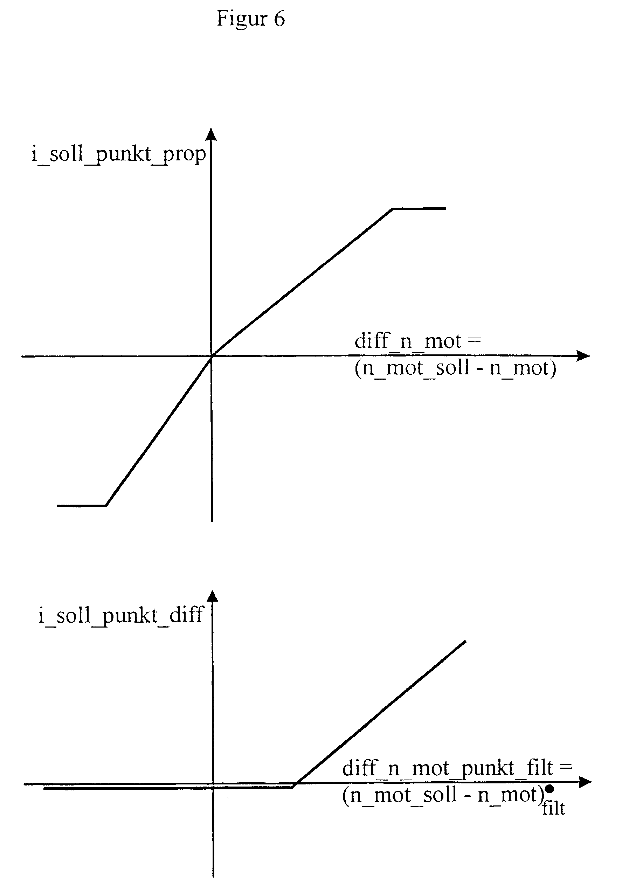

Im folgenden wird der Regler 10 zur Entlastung der Antriebsmaschine 5 näher beschrieben:
Wie bereits oben angesprochen, erfolgt die Korrektur der Grob-Getriebesollübersetzung i_0_soll durch den Regler 10 zur Entlastung der Antriebsmaschine 5 zum Ausgabewert i_soll an die Übersetzungsregelung 3 des Getriebes 7 vor allem aus dynamischen Gründen. Die wichtigste Aufgabe des Reglers 10 zur Entlastung der Antriebsmaschine 5 ist die Korrektur der Verstellgeschwindigkeit d/dt(i_0_soll) der Grob-Getriebesollübersetzung i_0_soll Daher ist die Korrektur der Grob-Getriebesollübersetzung i_0_soll als reine Gradientenkorrektur ausgeführt (Figur 5). Durch die Steigungsberechnung eines PT1-Glieds 15 wird zunächst eine unkorrigierte Verstellgeschwindigkeit i_soll_punkt_wunsch ermittelt:
   i_soll_punkt_wunsch = (1/τ_i_soll_wunsch)^{*}(i_0_soll-i_soll)
Dabei ist die Zeitkonstante τ_i_soll_wunsch ein Abstimmparameter. Das bedeutet, i_soll_punkt_wunsch folgt, geglättet durch den PT-1 Filter, der Dynamik, mit der der Getriebeabtriebsdrehzahlregler 9 die Soll-Drehzahl n_mot_soll für die Antriebsmaschine 5 vorgibt. i_soll_punkt_wunsch wird durch die Abstimmparameter i_soll_punkt_wunsch_min und i_soll_punkt_wunsch_max begrenzt:
   i_soll_punkt_wunsch_min ≤ i_soll_punkt_wunsch ≤ i_soll_punkt_wunsch_max.
Die effektiv wirksame Verstellgeschwindigkeit i_soll_punkt ergibt sich in einem Korrekturglied 16 durch Summation von i_soll_punkt_wunsch mit den beiden Korrekturtermen i_soll_punkt_prop und i_soll_punkt_diff:
   i_soll_punkt = i_soll_punkt_wunsch + i_soll_punkt_prop + i_soll_punkt_diff;
   i_soll_punkt_prop und i_soll_punkt_diff stellen den Proportional- und Differential-Regieranteil des Reglers 10 zur Entlastung der Antriebsmaschine 5 dar und werden über Kennlinien (Figur 6) in Abhängigkeit von der Regelabweichung diff_n_mot = n_mot_soll - n_mot bzw. deren gefilterter zeitlicher Ableitung diff_n_mot_punkt_filt = Filterfunktion(d/dt(n_mot_soll - n_mot)) vorgegeben.
Integration des Summenwertes i_soll_punkt in einem Integrierer 17 ergibt schließlich den endgültigen Sollwert i_soll, der von der Antriebsstrangsteuerung 1 an die Ubersetzungsregelung 3 des stufenlosen Getriebes ausgegeben wird.

In der Regel ändert sich durch die Korrekturterme die Richtung der Verstellung der Getriebeübersetzung nicht. Lediglich der Betrag der Verstellgeschwindigkeit wird vermindert, d. h. i_soll bewegt sich langsamer auf i_0_soll zu, wenn die Antriebsmaschine 5 gedrückt oder hochgedreht wird. Allerdings können in Extremsituationen wie z. B. einer plötzlichen Änderung zu sehr hohem Fahrwiderstand die Korrekturterme die unkorrigierte Verstellgeschwindigkeit i_soll_punkt_wunsch überkompensieren. Das bedeutet, es wird nicht nur langsamer zu kleinen Übersetzungszahlen i, sondern explizit zu großen Übersetzungszahlen i verstellt.

Wie bereits oben angesprochen, können sämtliche Rechenoperationen in analoger Weise anstelle mit der Getriebeübersetzung i und aller von ihr abgeleiteten Größen mit der reziproken Getriebeübersetzung i_rez und ihren analog abgeleiteten Größen durchgeführt werden. Dabei sind die abgeleiteten Größen natürlich mathematisch korrekt neu zu ermitteln.

### Bezugszeichen

- 1: Antriebsstrangsteuerung
- 2: Regelung (der Antriebsmaschine)
- 3: Übersetzungsregelung
- 4: Fahrer
- 5: Antriebsmaschine
- 6: Steuersignale
- 7: Getriebe
- 8: Fahrzeug
- 9: Getriebeabtriebsdrehzahlregler
- 10: Regler (zur Entlastung der Antriebsmaschine)
- 11: Recheneinheit
- 12: Proportional-Integral-Regler
- 13: Integrierer
- 14: Verzögerungsglied
- 15: PT1-Glied
- 16: Korrekturglied
- 17: Integrierer

## Patentansprüche

1. Antriebsstrangsteuerung (1) für ein Fahrzeug (8) oder eine selbstfahrende Arbeitsmaschine mit einer Antriebsmaschine (5) mit Regelung (2) und einem stufenlos verstellbaren Getriebe (7) mit Übersetzungsregelung (3) dadurch **gekennzeichnet**, daß die Antriebsstrangsteuerung (1) beiden Regelungen übergeordnet ist und eine Soll-Drehzahl n_mot_soll für die Antriebsmaschine (5) an die Regelung (2) der Antriebsmaschine (5) und eine Soll-Getriebeübersetzung i_soll an die Übersetzungsregelung (3) ausgibt, und daß sie als Kombination zweier Regler aufgebaut ist, dem Getriebeabtriebsdrehzahlregler (9) und dem Regler (10) zur Entlastung der Antriebsmaschine (5), wobei der Getriebeabtriebsdrehzahlregler (9) durch die Getriebeabtriebsdrehzahl n_ab als Regelgröße und die Soll-Drehzahl n_mot_soll der Antriebsmaschine (5) als Stellgröße charakterisiert ist, und der Regler (10) zur Entlastung der Antriebsmaschine (5) durch die Drehzahl n_mot der Antriebsmaschine (5) als Regelgröße und einen Korrekturwert Δi der Getriebeübersetzung als Stellgröße charakterisiert ist, wobei die Soll-Getriebeübersetzung i_soll bestimmt ist durch die Addition dieses Korrekturwerts Δi mit einer Grob-Getriebesollübersetzung i_0_soll, und letztere als Funktion der Soll-Drehzahl n_mot_soll der Antriebsmaschine (5) und der Soll-Getriebeabtriebsdrehzahl n_ab_soll gegeben ist.

2. Antriebsstrangsteuerung (1) nach Anspruch 1, dadurch **gekennzeichnet,** daß die Grob-Getriebesollübersetzung i_0_soll durch die Beziehung i_0_soll= n_mot_soll/n_ab_soll gegeben ist.

3. Antriebsstrangsteuerung (1) nach Anspruch 1, dadurch **gekennzeichnet,** daß der Getriebeabtriebsdrehzahlregler (9) und der Regler (10) zur Entlastung der Antriebsmaschine (5) als digitale PID-Regler ausgebildet sind.

4. Antriebsstrangsteuerung (1) nach Anspruch 1, dadurch **gekennzeichnet,** daß der Getriebeabtriebsdrehzahlregler (9) ein PI-Regler ist, und der Proportional- und der Integralanteil der Stellgröße n_mot_soll jeweils eine nichtlineare Abhängigkeit von der Regelabweichung n_ab_soll - n_ab besitzt.

5. Antriebsstrangsteuerung (1) nach Anspruch 4, dadurch **gekennzeichnet,** daß der Proportionalanteil n_mot_soll_prop der Stehgröße n_mot_soll sowie die zeitliche Ableitung ihres Integralanteils n_mot_soll_ip jeweils mittels Kennlinien in Abhangigkeit von der Regelabweichung n_ab_soll - n_ab ermittelt werden.

6. Antriebsstrangsteuerung (1) nach Anspruch 5, dadurch **gekennzeichnet,** daß der Integralanteil n_mot_soll_i der Stellgroße n_mot_soll begrenzt wird, so daß stets gilt:
n_mot_soll_i_ug ≤ n_mot_soll_i ≤ n_mot_soll_i_og
wobei
n_mot_soll_i_ug eine untere Begrenzung und
n_mot_soll_i_og eine obere Begrenzung für den Wert n_mot_soll_i darstellt.

7. Antriebsstrangsteuerung (1) nach Anspruch 5, dadurch **gekennzeichnet,** daß die zeitliche Ableitung n_mot_soll_ip des Integralanteils n_mot_soll_i der Stehgröße n_mot_soll durch einen Minimalwert n_mot_soll_ip_ug begrenzt wird.

8. Antriebsstrangsteuerung (1) nach Anspruch 7, dadurch **gekennzeichnet,** daß der Minimalwert n_mot_soll_ip_ug als Kennlinie in Abhängigkeit der relativen Last p_menge_rel der Antriebsmaschine (5) vorgegeben ist, wobei die relative Last p_menge_rel der Quotient aus dem Lastsignal p_menge und der drehzahlabhängigen
Vollast p_menge_max der Antriebsmaschine (5) ist und die Werte von p_menge_max Abstimmparameter entsprechend der Antriebsmaschine (5) sind.

9. Antriebsstrangsteuerung (1) nach Anspruch 1, dadurch **gekennzeichnet,** daß die Stellgröße n_mot_soll durch ein Verzögerungsglied (14), insbesondere durch ein PT1-Glied mit Gradienten- und Absolutwertbegrenzung gefiltert wird.

10. Antriebsstrangsteuerung (1) nach Anspruch 1, dadurch **gekennzeichnet,** daß die Stellgröße n_mot_soll die Beziehung n_mot_min ≤ n_mot_soll ≤ n_mot_max erfüllt, wobei n_mot min ein vorgegebener Minimalwert der Soll-Drehzahl n_mot_soll der Antriebsmaschine (5) und n_mot_max ein vorgegebener Maximalwert der Soll-Drehzahl n_mot_soll der Antriebsmaschine (5) ist.

11. Antriebsstrangsteuerung (1) nach Anspruch 1, d'adurch **gekennzeichnet,** daß die zeitliche Ableitung der Steilgröße n_mot_soll_p die Beziehung n_mot_soll_p_min ≤ n_mot_soll_p ≤ n_mot_soll_p_max erfüllt, wobei n_mot_soll_p_min ein vorgegebener Minimalwert der zeitlichen Ableitung n_mot_soll_p der Soll-Drehzahl n_mot_soll der Antriebsmaschine (5) und n_mot_soll_p_max ein vorgegebener Maximalwert der zeitlichen Ableitung n_not_soll_p der Soll-Drehzahl der Antriebsmaschine (5) ist.

12. Antriebsstrangsteuerung (1) nach Anspruch 7 und 11, dadurch **gekennzeichnet,** daß der vorgegebene Minimalwert n mot_soll_p_min der zeitlichen Ableitung n_mot_soll_p der Soll-Drehzahl der Antriebsmaschine (5) durch den Wert n_mot_soll_ip_ug gegeben ist.

13. Antriebsstrangsteuerung (1) nach Anspruch 1, dadurch **gekennzeichnet,** daß der Regler (10) zur Entlastung der Antriebsmaschine (5) aus der Grob-Verstellgeschwindigkeit d/dt(i_0_soll) die korrigierte Verstellgeschwindigkeit i_soll_punkt berechnet, und daß die Grob-Verstellgeschwindigkeit d/dt(i_0_soll) durch die zeitliche Ableitung der Grob-Getriebesollübersetzung i_0_soll bestimmt wird, und daß i_0_soll in der Recheneinheit (11) aus der Solldrehzahl n_mot_soll vom Getriebeabtriebsdrehzahlregler (9) und aus der Soll-Getriebeabtriebsdrehzahl n_ab_soll vom Fahrer (4) berechnet wird und die Integration der korrigierten Verstellgeschwindigkeit im Regler (10) die Sollgetriebeübersetzung i_soll ergibt.

14. Antriebsstrangsteuerung (1) nach Anspruch 13, dadurch **gekennzeichnet,** daß der Regler (10) zur Entlastung der Antriebsmaschine (5) einen digitalen Proportional-Differential-Regler beinhaltet, der die korrigierte Verstellgeschwindigkeit i_soll_punkt einstellt.

15. Antriebsstrangsteuerung (1) nach Anspruch 14, dadurch **gekennzeichnet,** daß die Verstellgeschwindigkeit i_soll_punkt durch die Beziehung i_soll_punkt = i_soll_punkt_wunsch + i_soll_punkt_prop + i_soll_punkt_diff gegeben ist, wobei i_soll_punkt_wunsch eine Funktion von i_0_soll und i_soll ist, i_soll_punkt_prop den proportionalen Regleranteil darstellt und über eine Kennlinie in Abhängigkeit von der Regelabweichung diff_n_mot = n_mot_soll - n mot vorgegeben wird und i soll Punkt diff den Differential-Regleranteil darstellt und über eine Kennlinie in Abhängigkeit von der gefilterten zeitlichen Ableitung der Regelabweichung diff_n_mot_punkt_filt = Filterfunktion(d/dt(n mot soll-n_mot)) vorgegeben wird.

16. Antriebsstrangsteuerung (1) nach Anspruch 15, dadurch **gekennzeichnet,** daß
i_soll_punkt_wunsch durch die Beziehung
i_soll_punkt_wunsch = (1/τ_i_soll_wunsch)^{*}(i_0_soll-i_soll) gegeben ist,
wobei die Zeitkonstante τ_i_soll_wunsch ein Abstimmparameter ist.

17. Antriebsstrangsteuerung (1) nach Anspruch 15 oder 16, dadurch **gekennzeichnet,** daß
i_soll_punkt_wunsch durch die Beziehung
i_soll_punkt_wunsch_min ≤ i_soll_puntt_wunsch ≤
i_soll_punkt_wunsch_max begrenzt wird, wobei
i_soll_punkt_wunsch min und i_soll_punkt_wunsch_max Abstimmparameter sind.

## Claims

1. Drive train control (1) for a vehicle (8) or an automotive working machine having a drive machine (5) with regulation (2) and a continuously variable gearbox (7) with gear ratio regulation (3), characterized in that the drive train control (1) is of higher level than the two regulators and emits a nominal rotational speed n_mot_nom for the drive machine (5) to the regulator (2) of the drive machine (5) and a nominal gearbox ratio i_nom to the gear ratio regulator (3), and in that it is constructed as a combination of two regulators, the gearbox output rotational speed regulator (9) and the regulator (10) for removing load from the drive machine (5), wherein the gearbox output rotational speed regulator (9) is characterized by the gearbox output rotational speed n_ab as controlled variable and the nominal rotational speed n_mot_nom of the drive machine (5) as manipulated variable, and the regulator (10) for removing load from the drive machine (5) is characterized by the rotational speed n_mot of the drive machine (5) as controlled variable and a correction value Δi of the gearbox ratio as manipulated variable, wherein the nominal gearbox ratio i_nom is determined by the addition of said correction value Δi to a coarse gearbox nominal ratio i_0_nom and the latter is given as a function of the nominal rotational speed n_mot_nom of the drive machine (5) and the nominal gearbox output rotational speed n_ab_nom.

2. Drive train control (1) according to Claim 1, characterized in that the coarse gearbox nominal ratio i_0_nom is given by the relationship i_0_nom = n_mot_nom/n_ab_nom.

3. Drive train control (1) according to Claim 1, characterized in that the gearbox output rotational speed regulator (9) and the regulator (10) for removing load from the drive machine (5) are designed as digital PID regulators.

4. Drive train control (1) according to Claim 1, characterized in that the gearbox output rotational speed regulator (9) is a PI regulator and the proportional component and the integral component of the manipulated variable n_mot_nom each have a nonlinear dependence on the system deviation n_ab_nom - n_ab.

5. Drive train control (1) according to Claim 4, characterized in that the proportional component n_mot_nom_prop of the manipulated variable n_mot_nom and also the time derivative of its integral component n_mot_nom_ip are each determined by means of characteristic curves as a function of the system deviation n_ab_nom-n_ab.

6. Drive train control (1) according to Claim 5, characterized in that the integral component n_mot_nom_i of the manipulated variable n_mot_nom is limited so that the following always applies:
n_mot_nom_i_ll ≤ n_mot_nom_i ≤ n_mot_nom_i_ul
where
n_mot_nom_i_ll is a lower limit and
n_mot_nom_i_ul is an upper limit for the value n_mot_nom_i.

7. Drive train control (1) according to Claim 5, characterized in that the time derivative n_mot_nom_ip of the integral component n_mot_nom_i of the manipulated variable n_mot_nom is limited by a minimum value of n_mot_nom_ip_11.

8. Drive train control (1) according to Claim 7, characterized in that the minimum value n_mot_nom_ip_ll is specified as a characteristic curve depending on the relative load p_vol_rel of the drive machine (5), wherein the relative load p_vol_rel is the quotient of the load signal p_vol and the rotational-speed-dependent full load p_vol_max of the drive machine (5) and the values of p_vol_max are tuning parameters relating to the drive machine (5) .

9. Drive train control (1) according to Claim 1, characterized in that the manipulated variable n_mot_nom is filtered through a delay element (14), in particular through a PT1 element having gradient and absolute-value limiters.

10. Drive train control (1) according to Claim 1, characterized in that the manipulated variable n_mot_nom fulfils the relationship n_mot_min ≤ n_mot_nom ≤ n_mot_max, wherein n_mot_min is a specified minimum value of the nominal rotational speed n_mot_nom of the drive machine (5) and n_mot_max is a specified maximum value of the nominal rotational speed n_mot_nom of the drive machine (5).

11. Drive train control (1) according to Claim 1, characterized in that the time derivative of the manipulated variable n_mot_nom _p fulfils the relationship n_mot_nom_p_min ≤ n_mot_nom_p ≤ n_mot_nom_p_max, wherein n_mot_nom_p_min is a specified minimum value of the time derivative n_mot_nom_p of the nominal rotational speed n_mot_nom of the drive machine (5) and n_mot_nom_p_max is a specified maximum value of the time derivative n_mot_nom_p of the nominal rotational speed of the drive machine (5).

12. Drive train control (1) according to Claims 7 and 11, characterized in that the specified minimum value n_mot_nom_p_min of the time derivative n_mot_nom_p of the nominal rotational speed of the drive machine (5) is given by the value n_mot_nom_ip_ll.

13. Drive train control (1) according to Claim 1, characterized in that the regulator (10) for removing load from the drive machine (5) calculates the corrected adjustment speed i_nom_point from the coarse adjustment speed d/dt (i_0_nom), and in that the coarse adjustment speed d/dt (i_0_nom) is determined by the time derivative of the coarse gearbox nominal ratio i_0_nom, and in that i_0_nom is calculated in the computing unit (11) from the nominal rotational speed n_mot_nom of the gearbox output rotational speed regulator (9) and from the nominal gearbox output rotational speed n_ab_nom of the driver (4) and the integration of the corrected adjustment speed in the regulator (10) yields the nominal gearbox ratio i nom.

14. Drive train control (1) according to Claim 13, characterized in that the regulator (10) for removing load from the drive machine (5) contains a digital proportional/differential regulator that adjusts the corrected adjustment speed i_nom_point.

15. Drive train control (1) according to Claim 14, characterized in that the adjustment speed i_nom_point is given by the relationship i_nom_point = i_nom_point_desire + i_nom_point_prop + i_nom_point_diff, wherein i_nom_point_desire is a function of i_0_nom and i_nom, i_nom_point_prop is the proportional regulator component and is specified by means of a characteristic line depending on the system deviation diff_n_mot = n_mot_nom-n_mot and i_nom_point_diff is the differential regulator component and is specified by means of a characteristic line depending on the filtered time derivative of the system deviation diff_n_mot_point_filt = filter function (d/dt (n_mot_nom - n_mot)).

16. Drive train control (1) according to Claim 15, characterized in that i_nom_point_desire is given by the relationship i_nom_point_desire =
(1/τ_i_nom_desire)^{*}(i_0_nom - i_nom), wherein the time constant τ_i_nom_desire is a tuning parameter.

17. Drive train control (1) according to Claim 15 or 16, characterized in that i_nom_point_desire is limited by the relationship i_nom_point_desire_min ≤ i_nom_point_desire ≤ i_nom_point_desire_max, wherein i_nom_point_desire_min and i_nom_point_desire_max are tuning parameters.

## Revendications

1. Commande de chaîne cinématique (1) pour un véhicule (8) ou un engin automoteur comprenant un moteur d'entraînement (5) avec une régulation (2) et une transmission (7) réglable en continu avec une régulation de rapport (3), **caractérisée** en ce que la commande de chaîne cinématique (1) est de classe supérieure par rapport aux deux régulations et transmet une vitesse de rotation de consigne n_mot_soll pour le moteur d'entraînement (5) à la régulation (2) du moteur d'entraînement (5) et un rapport de consigne de la transmission i_soll à la régulation de rapport (3), et en ce qu'elle est constituée par une combinaison de deux régulateurs, le régulateur (9) de vitesse de rotation de sortie de la transmission et le régulateur (10) de décharge du moteur d'entraînement (5), le régulateur (9) de vitesse de rotation de sortie de la transmission étant caractérisé par la vitesse de rotation de sortie n_ab de la transmission comme grandeur réglée et la vitesse de rotation de consigne n_mot_soll du moteur d'entraînement (5) comme grandeur réglable, et le régulateur (10) de décharge du moteur d'entraînement (5) étant caractérisé par la vitesse de rotation n_mot du moteur d'entraînement (5) comme grandeur réglée et une valeur de correction Δi du rapport de la transmission comme grandeur réglable, le rapport de consigne i_soll de la transmission étant déterminé par l'addition de cette valeur de correction Δi avec un rapport de consigne approché i_0_soll de la transmission et cette dernière étant donnée comme fonction de la vitesse de rotation de consigne n_mot_soll du moteur d'entraînement (5) et de la vitesse de rotation de sortie de consigne n_ab_soll de la transmission.

2. Commande de chaîne cinématique (1) selon la revendication 1, **caractérisée** en ce que le rapport de consigne approché i_0 _soll de la transmission est donné par la relation i_0_soll = n_mot_soll/n_ab_soll.

3. Commande de chaîne cinématique (1) selon la revendication 1, **caractérisée** en ce que le régulateur (9) de vitesse de rotation de sortie de la transmission et le régulateur (10) de décharge du moteur d'entraînement (5) sont réalisés sous la forme de régulateurs PID numériques.

4. Commande de chaîne cinématique (1) selon la revendication 1, **caractérisée** en ce que le régulateur (9) de vitesse de rotation de sortie de la transmission est un régulateur PI, et la partie proportionnelle et la partie intégrale de la grandeur de réglage n_mot_soll comportent chacune une relation de dépendance non linéaire par rapport à l'écart de régulation n_ab_soll - n_ab.

5. Commande de chaîne cinématique (1) selon la revendication 4, **caractérisée** en ce que la partie proportionnelle n_mot_soll_prop de la grandeur de réglage n_mot_soll, ainsi que la dérivée par rapport au temps de sa partie intégrale n_mot_soll_ip sont obtenues au moyen de courbes caractéristiques en fonction de l'écart de régulation n_ab_soll - n_ab.

6. Commande de chaîne cinématique (1) selon la revendication 5, **caractérsée** en ce que la partie intégrale n_mot_soll_i de la grandeur de réglage n_mot_soll est limitée, de manière qu'on ait toujours :
n_mot_soll_i_ug ≤ n_mot_soll_i ≤ n_mot_soll_i_og
où
n_mot_soll_i_ug représente une limite inférieure et
n_mot_soll_i_og une limite supérieure pour la valeur n_mot_soll_i.

7. Commande de chaîne cinématique (1) selon la revendication 5, **ca-ractérisée** en ce que la dérivée par rapport au temps n_mot_soll_ip de la partie intégrale n_mot_soll_i de la grandeur réglable n_mot_soll est limitée par une valeur minimale n_mot_soll_ip_ug.

8. Commande de chaîne cinématique (1) selon la revendication 7, **caractérisée** en ce que la valeur minimale n_mot_soll_ip_ug est prédéterminée sous la forme d'une courbe caractéristique en fonction de la charge relative p_menge_rel du moteur d'entraînement (5), la charge relative p_menge_rel étant le quotient du signal de charge p_menge par la pleine charge fonction de la vitesse de rotation p_menge_max du moteur d'entraînement (5) et les valeurs de p_menge_max étant des paramètres d'adaptation fonction du moteur d'entraînement (5).

9. Commande de chaîne cinématique (1) selon la revendication 1, **caractérisée** en ce que la grandeur réglable n_mot_soll est filtrée par un élément de temporisation (14), en particulier par un élément PT1 comportant une limite de gradient et une limite de valeur absolue.

10. Commande de chaîne cinématique (1) selon la revendication 1, **caractérisée** en ce que la grandeur réglable n_mot_sali respecte la condition n_mot_min ≤ n_mot_soll ≤ n_mot_max, où n_mot_min est une valeur minimale prédéterminée de la vitesse de rotation de consigne n_mot_soll du moteur d'entraînement (5) et n_mot_max est une valeur maximale prédéterminée de la vitesse de rotation de consigne n_mot_soll du moteur d'entraînement (5).

11. Commande de chaîne cinématique (1) selon la revendication 1, **caractérisée** en ce que la dérivée par rapport au temps de la grandeur réglable n_mot_soit _p respecte la condition n_mot_soit _p_min ≤ n_mot_soll_p ≤ n_mot_soll_p_max, dans laquelle n_mot_soll _p_min est une valeur minimale prédéterminée de la dérivée par rapport au temps n_mot_soll_p, de la vitesse de rotation de consigne n_mot_soll du moteur d'entraînement (5) et n_mot_soll_p_max est une valeur maximale prédéterminée de la dérivée par rapport au temps n_mot_soll_p de la vitesse de rotation de consigne du moteur d'entraînement (5).

12. Commande de chaîne cinématique (1) selon les revendications 7 et 11, **caractérisée** en ce que la valeur minimale prédéterminée n_mot_soll_p_min de la dérivée par rapport au n_mot_soll_p est la vitesse de rotation de consigne du moteur d'entraînement (5) par la valeur n_mot_soll_ip_ug.

13. Commande de chaîne cinématique (1) selon la revendication 1, **caractérisée** en ce que le régulateur (10) de décharge du moteur d'entraînement (5) calcule, à partir de la vitesse de modification approchée d/dt/(i_0_soll), la vitesse de modification corrigée i_soll_punkt, en ce que la vitesse de modification approchée d/dt(i_0_soll) est déterminée par la dérivée par rapport au temps du rapport de consigne approché i_0_soll de la transmission, et en ce que i_0_soll est calculé dans l'unité de calcul (11) à partir de la vitesse de rotation de consigne n_mot_soll fournie par le régulateur (9) de vitesse de rotation de sortie de la transmission et à partir de la vitesse de rotation de sortie de consigne n_ab_soll de la transmission fournie par le conducteur (4), et en ce que l'intégration de la vitesse de modification corrigée dans le régulateur (10) donne le rapport de consigne i_soll de la transmission.

14. Commande de chaîne cinématique (1) selon la revendication 13, **caractérisée** en ce que le régulateur (10) de décharge du moteur d'entraînement (5) comprend un régulateur proportionnel différentiel numérique qui règle la vitesse de modification corrigée de la i_soll_punkt.

15. Commande de chaîne cinématique (1) selon la revendication 14, **caractérisée** en ce que la vitesse de modification i_soll_punkt est donnée par la relation i_soll_punkt = i_soll_punkt_wunsch + i_soll_punkt_prop + i_sill_punkt_diff, où i_soll_punkt_wunsch est une fonction de i_0_soll et de i_soll,
i_soll_punkt_prop représente la partie proportionnelle du régulateur et est prédéterminée au moyen d'une courbe caractéristique en fonction de l'écart de régulation diff_n_mot = n_mot_soll - n_mot et i_soll_punkt_diff représente la partie différentielle du régulateur, et au moyen d'une courbe caractéristique en fonction de la dérivée par rapport au temps de l'écart de régulation diff_n_mot_punkt_filt = fonction du filtre d/dt (n_mot_soll - n_mot)).

16. Commande de chaîne cinématique (1) selon la revendication 15, **caractérisée** en ce que
i_soll_punkt_wunsch est donné par la relation
i_soll_punkt_wunsch = (1/τ_i_soll_wunsch) ^{*} (i_0_soll-i_soll),
où la constante de temps τ_i_soll_wunsch est un paramètre d'adaptation.

17. Commande de chaîne cinématique (1) selon la revendication 15 ou 16,caractérisée en ce que
i_soll_punkt_wunsch est limité par la relation
i_soll_punkt_wunsch_min ≤ i_soll_punkt_wunsch ≤ i_soll_punkt_wunsch_max,
où
i_soll_punkt_wunsch_min et i_soll_punkt_wunsch_max sont des paramètres d'adaptation.
